# EUROPÄISCHE PATENTSCHRIFT

(11) **EP 2 018 310 B1**
(45) Veröffentlichungstag und Bekanntmachung des Hinweises auf die Patenterteilung: **14.09.2016**
(21) Anmeldenummer: 07725006.6
(22) Anmeldetag: 09.05.2007
(51) Int. Cl.: B62D 21/09, B62D 25/04, B62D 29/00

(54) **VERSTÄRKUNGSMODUL FÜR EINE KRAFTFAHRZEUGKAROSSERIE**
REINFORCING MODULE FOR A MOTOR VEHICLE BODY
MODULE DE RENFORT D'UNE CARROSSERIE DE VÉHICULE AUTOMOBILE

(30) Priorität: 11.05.2006 DE 102006021883
(43) Veröffentlichungstag der Anmeldung: 28.01.2009
(73) Patentinhaber: GM Global Technology Operations LLC, Detroit, MI 48265-3000 (US)
(72) Erfinder: ENDERICH, Thomas, 65510 Hünstetten (DE); KLIMEK, Stanislaw, 60433 Frankfurt (DE); TESKE, Lothar, 63743 Aschaffenburg (DE)
(74) Vertreter: Spitzfaden, Ralf
(86) Internationale Anmeldenummer: PCT/EP2007/004083
(87) Internationale Veröffentlichungsnummer: WO 2007/131675

(56) Entgegenhaltungen:
- EP-A- 1 435 320
- DE-A1- 19 616 959
- DE-A1- 19 713 760
- FR-A- 2 890 361
- JP-A- 2004 306 896

## Beschreibung

Die Erfindung betrifft ein Verstärkungsmodul für eine Kraftfahrzeugkarosserie gemäß dem Oberbegriff des Anspruchs 1. Das Verstärkungsmodul kann unter anderem für Hochstreben eines Pkws verwendet werden, die üblicherweise als A-, B- und C-Säulen bezeichnet werden.

Neben der Gewährleistung eines hohen Fahrkomforts ist die Sicherstellung eines optimalen Schutzes der Fahrzeuginsassen ein wichtiges Anliegen bei der Entwicklung neuer Fahrzeuge. Während bei einem Frontalzusammenstoß nominell eine größere Verformungs- oder Knautschzone zur Verfügung steht, sind die Anforderungen an einen guten Insassenschutz bei einem Seitenaufprall schwieriger zu erfüllen.

Zum Schutz der Fahrzeuginsassen muss ein Fahrzeug vor der Zulassung in den verschiedenen Ländern Kollisions- bzw. Crashtests bestehen. Hierzu gehören unter anderem ein Seitenaufpralltest nach EuroNCAP (European New Car Assessment Programme) mit einer deformierbaren Barriere für den oberen Karosseriebereich und ein Seitenaufpralltest nach EuroNCAP mit einem starren Pfahl für den unteren Karosseriebereich. Diese Tests werden weiterentwickelt und die zu erfüllenden Kriterien werden zunehmend strenger.

Zur Einhaltung der obigen Kollisionstests ist es bekannt, die Hochstreben mit lokalen Verstärkungen auszustatten, um sie zu versteifen. Dies gilt insbesondere für die B-Säule, die zur Gewährleistung eines guten Seitenaufprallschutz besonders wichtig ist. In der Fertigung werden alle lokalen Verstärkungen positioniert und mit der Karosserie unter Beachtung der einzuhaltenen Toleranzen verschweißt. Weiterhin werden zahlreiche Unterzusammenbauten gesteuert und diese verbaut.

Es ist ferner bekannt, zwecks eines verbesserten Seitenaufprallschutzes die Hochstrebe entweder als Ganzes oder lokal massiver auszuführen.

Ein Verstärkungsteil zum Verstärken eines Außenbleches eines Kraftfahrzeuges ist aus der JP 2004 306896 A bekannt, welche als nächstliegend erachtet wird. An dem Außenblech sind mittels Befestigungsmitteln mehrere Komponenten des Kraftfahrzeuges montiert, wobei die Befestigungsmittel durch das Verstärkungselement hindurch ragen.

Ein weiteres Verstärkungsteil ist aus der DE 196 16 959 A1 bekannt. Das Verstärkungsteil ist dort als Profilträger eines Tragelements einer Fahrzeugkarosserie ausgebildet.

Aus der EP 1 435 320 A ist ein Strukturverstärkungsbauteil bekannt, um eine strukturelle Verstärkung innerhalb eines hohlen Bauteiles, beispielsweise der A-Säule eines Kraftfahrzeuges, zur Verfügung zu stellen.

Aufgabe der Erfindung ist es, ein Verstärkungsmodul für eine Fahrzeugkarosserie bereitzustellen, mit dem ein verbesserter Seitenaufprallschutz erreicht wird.

Die Lösung dieser Aufgabe erfolgt gemäß einer Ausführungsform mit den Merkmalen des unabhängigen Anspruchs 1. Vorteilhafte Weiterbildungen werden durch die abhängigen Ansprüche wiedergegeben.

Die Aufgabe wird in einem ersten Aspekt der Erfindung von einem Verstärkungsmodul für eine Kraftfahrzeugkarosserie gelöst, das an einem Karosserieteil zur Anlage bringbar und an bzw. mit diesem befestigbar ist. Das Karosserieteil besitzt hierbei mehrere Befestigungsstellen für zu montierende Kraftfahrzeugkomponenten. Jeder Befestigungsstelle ist mindestens ein am oder zumindest teilweise im Verstärkungsmodul befestigtes Mittel zur Befestigung des Verstärkungsmoduls am Karosserieteil zugeordnet.

Das Verstärkungsmodul dient einerseits der Verstärkung des Karosserieteils als Ganzes und andererseits der Verstärkung einer Mehrzahl lokaler Befestigungsstellen. Für die zweite Funktion ist es an den Befestigungsstellen des Karosserieteils jeweils mit einem Befestigungsmittel ausgestattet, mit dem die zu befestigende Kraftfahrzeugkomponente und das Verstärkungsmodul am Karosserieteil befestigt werden.

Computersimulierte Kollisionstests haben gezeigt, dass ein mit dem obigen Verstärkungsmodul ausgestattetes Fahrzeug im Vergleich zum Fall einer Mehrzahl von Befestigungsstellen mit jeweils nur lokaler Verstärkung einen verbesserten Seitenaufprallschutz nach EuroNCAP mit starrem Pfahl gewährleistet. Der Grund hierfür ist die aussteifende Wirkung des Verstärkungsmoduls im Seitenkarosseriebereich. Darüber hinaus ist zum Zweck eines verbesserten Seitenaufprallschutzes nur ein einziges Verstärkungsmodul am besagten Karosserieteil zu befestigen, z.B. nur ein einziges Verstärkungsmodul an der B-Säule, was die Herstellungszeit des Fahrzeugs senkt und damit Kosten einspart. Es tritt hinzu, dass bei gleichbleibendem

Seitenaufprallschutz trotz des Verstärkungsmoduls als zusätzlichem Teil das Gewicht der Karosserie insgesamt geringer ausfällt. Der Grund ist, dass die oben genannten Materialaufdickungen am Karosserieteil entfallen und, wie später noch erläutert werden wird, beim Verstärkungsmodul ein flexibler Materialmix unter Verwendung leichter Materialien möglich ist.

Weiterhin werden mit dem Verstärkungsmodul die einzelnen Befestigungsstellen robuster gegenüber an den Befestigungsstellen wirkenden Drehmomenten, wodurch dort im Belastungsfall Deformationen oder Lackbrüche weniger wahrscheinlich sind.

Es ist als Befestigungsmittel eine Schraube, eine Schraubenmutter, ein Rastelement oder ein Clip vorgesehen. Dienen die Befestigungsmittel zur Herstellung einer Schraubverbindung, so kann durch den vorgebbaren Abstand zwischen Schraubenkopf und Schraubenmutter der für das Kraftmoment maßgebliche Hebelarm eingestellt werden. Dadurch wird die Befestigungsstelle im Sinne der Ausführungen des letzten Absatzes robuster gegenüber wirkenden Drehmomenten.

Eine Ausführungsform des Verstärkungsmoduls sieht als Befestigungsmittel eine Schraube vor, und ferner, dass das Verstärkungsmodul in seiner Befestigungsposition am Karosserieteil mit einer seiner Schrauben durch ein an einer Befestigungsstelle befindliches Loch des Karosserieteils hindurchragt. Bei der Montage wird das Verstärkungsmodul angelegt und seine Schrauben durch korrespondierende Öffnungen bzw. Löcher des Karosserieteils hindurchgeführt. Anschließend wird eine zu befestigende Kraftfahrzeugkomponente zur Anlage gebracht und die Schraubverbindung mit einer Schraubmutter komplettiert.

Eine Ausführungsform des Verstärkungsmoduls kann ferner so beschaffen sein, dass als Befestigungsmittel eine Schraubmutter vorgesehen und das Verstärkungsmodul in seiner Befestigungsposition am Karosserieteil eine seiner Schraubmuttern derart angeordnet ist, dass eine Schraube, die durch ein an einer Befestigungsstelle befindliches Loch des Karosserieteils hindurchführbar ist, in die besagte Schraubmutter hineindrehbar ist. Bei der Montage wird die Schraube zuerst durch ein Loch der zu befestigenden Kraftfahrzeugkomponente, dann durch das Karosserieteil und zuletzt durch das Verstärkungsmodul hindurchgeführt.

Eine Alternative sieht vor, dass das Verstärkungsmodul in seiner durchgehenden Öffnung an der Befestigungsstelle eine Hülse besitzt. Durch die Hülse kann eine Schraube durchgeführt werden um eine Schraubverbindung herzustellen.

Eine weitere Ausführungsform des Verstärkungsmoduls besitzt Flansche zum bündigen Anlegen an und Befestigen mit einem Teil einer Hochstrebe. Die Flansche dienen hierbei zum Herstellen einer Klebverbindung zwischen Verstärkungsmodul und Karosserieteil. Alternativ zur Klebverbindung kann auch eine Clip- oder Rastverbindung gewählt werden.

Ferner ist eine weitere Ausführungsform des Verstärkungsmoduls zumindest teilweise aus Kunststoff gefertigt und/oder besitzt mehrere durchgehende Öffnungen. Die Befestigungsstellen werden damit nicht mit schweren schweißfähigen Metallteilen verstärkt, sondern über leichtere Materialien wie Kunststoffe, zu denen auch Verbundwerkstoffe gehören. Abhängig von den lokalen Erfordernissen beim Seitenaufprallschutz kann insgesamt ein hinsichtlich seines Gewichts optimaler Materialmix gewählt werden. Gleichzeitig lässt sich die Wandstärke für das Karosserieteil absenken, sodass sich insgesamt das Fahrzeuggewicht reduzieren lässt.

Ein weiterer Aspekt der Erfindung bezieht sich ferner auf ein Kraftfahrzeug mit einer Karosserie, bei dem an einem Teil der Karosserie ein Verstärkungsmodul nach einem der vorherigen Ansprüche befestigt ist. Das Karosserieteil kann eine Hochstrebe wie beispielsweise die B-Säule sein, wodurch sich mit dem Verstärkungsteil ein verbesserter Seitenaufprallschutz für das Fahrzeug ergibt.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigt:
- Fig. 1a: eine Seitenansicht auf ein Karosserieteil;
- Fig. 1b: eine Draufsicht auf ein Karosserieteil;
- Fig. 1c: Schnitte durch das Karosserieteil der Fig. 1b;
- Fig. 2a: eine Seitenansicht auf ein in das Karosserieteil der Fig. 1a eingefügtes Verstärkungsteil;
- Fig. 2b: eine Draufsicht auf die Anordnung der Fig. 2a;
- Fig. 2c: Schnitte durch die Anordnung der Fig. 2a;
- Fig. 3: einen Schnitt gem. Fig. 2c in der Detailansicht gemäß einer ersten Ausführungsform,
- Fig. 4: einen weiteren Schnitt gem. Fig. 2c in der Detailansicht gemäß einer weiteren Ausführungsform,
- Fig. 5: einen Schnitt gem. Fig. 2c in der Detailansicht gemäß einer weiteren Ausführungsform.

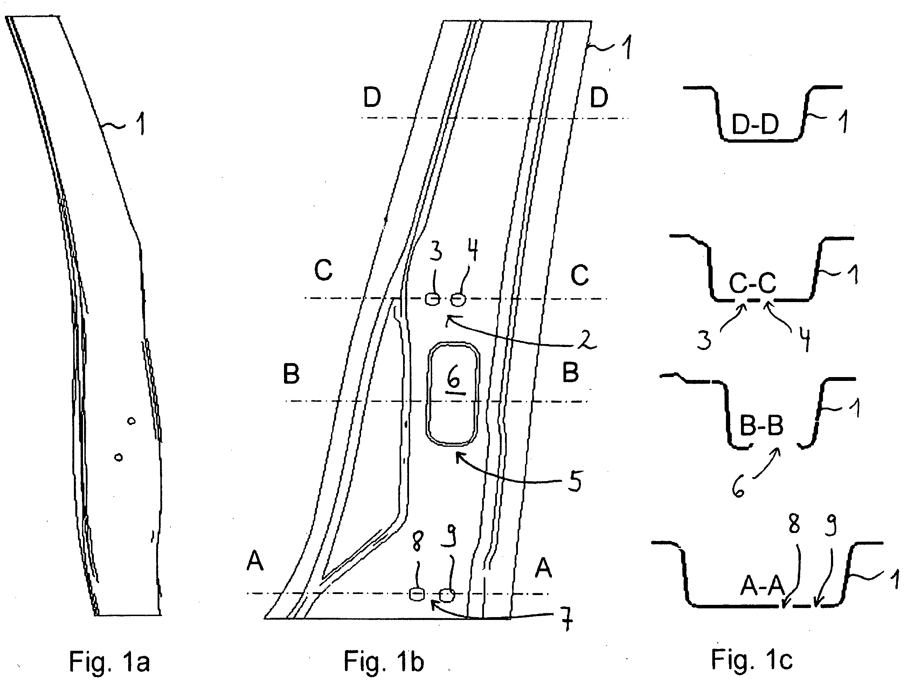

Fig. 1a zeigt ein Karosserieteil 1 in der Seitenansicht und in der Fig. 1b in der Draufsicht. Bei dem Karosserieteil 1 handelt sich um einen Teil der B-Säule mit einer Befestigungsstelle 2 in Gestalt von zwei Löchern 3, 4 für die obere Befestigung des Türscharniers, einer Befestigungsstelle 5 in Gestalt einer Materialaussparung 6 sowie einer weiteren Befestigungsstelle 7 in Gestalt von Löchern 8, 9 für die untere Befestigung des Türscharniers. Die Materialaussparung 6 dient als eine Kabeldurchführung und Steckerbefestigung für die Elektro- und Steuerungskabel der hinteren Fahrzeugtür. Weitere Befestigungsstellen für die Befestigung anderer Fahrzeugkomponenten wie beispielsweise für die Befestigung des Schließbügels des Türschlosses oder der Türbremse sind aus Vereinfachungsgründen nicht gezeigt.

Fig. 1c zeigt vier Schnitte durch das Verstärkungsteil der Fig. 1b entlang der Linien A-A, B-B, C-C sowie D-D. Man erkennt, dass das Karosserieteil 1 im Wesentlichen ein hutförmiges Profil hat und sich die eingangs erwähnten Befestigungsstellen jeweils am Boden des Hutprofils befinden.

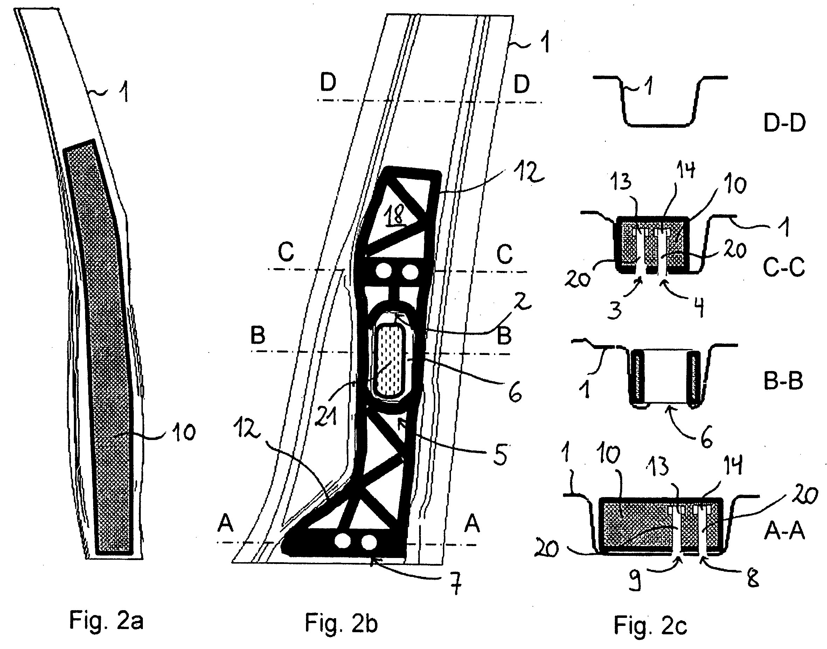

Die Figuren 2a-c entsprechen den Figuren 1a-c, jedoch ist das Karosserieteil 1 hier mit einem Verstärkungsmodul 10 ergänzt.

Fig 2a zeigt hierbei, dass es in dem hutförmigen Profil des Karosserieteils 1 angeordnet ist und in der Seitenansicht darin verschwindet. Das Verstärkungsmodul 10 kann über einen Flansch 11 mit dem Karosserieteil 1 verklebt oder mit über eine Clipverbindung (nicht gezeigt) mit diesem verbunden sein.

Fig. 2b zeigt, dass das Verstärkungsmodul 10 massiv ausgeführt sein kann aber nicht muss. Es umfasst in der Ausführungsform der Fig. 2b mehrere Stege 12, die als Gesamtheit ein gitterförmiges Verstärkungsmodul 10 bilden. Zwischen den Stegen 12 gibt es auch durchgehende Öffnungen 18, mit denen das Gewicht des Verstärkungsmoduls 10 begrenzt werden kann. Es können ausgewählte Teile des Verstärkungsmoduls 10, zum Beispiel solche im Bereich der Befestigungsstellen 2,5,7 massiv ausgeführt sein. Hierbei kann auch ein Materialmix mit leichteren und schwereren Materialien gewählt werden, deren Art und Anordnung so gewählt werden, dass bei einem Seitenaufprall der Insassenschutz optimal ist.

Die Fig. 2c zeigt Schnitte A-A, B-B, C-C und D-D entsprechend zu den Schnitten der Fig. 1c.

Der Schnitt A-A zeigt eine erste Befestigungsstelle 7, die der unteren Befestigung des Türscharniers dient. Dort ist das Verstärkungsmodul 10 massiv ausgeführt und sind in ihm zwei Schraubmuttern 13, 14 eingelassen bzw. eingebettet. Dies kann so erfolgen, dass das Verstärkungsmodul 10 an der Befestigungsstelle 4 ein Kunststoffblock mit eingegossenen Schraubmuttern 13, 14 ist. Bei der Montage wird eine Schraube über die Löcher 8, 9 in die zylindrischen Ausnehmungen 20 eingeführt in die Schraubmuttern 13, 14 eingeschraubt.

Der Schnitt B-B zeigt den Bereich einer zweiten Befestigungsstelle 5, wo ein Stecker 21 für die Elektro- und Steuerungskabel der hinteren Fahrzeugtür befestigbar ist. Auch hier ist das Verstärkungsmodul 10 nicht massiv ausgeführt, sondern erlaubt weiterhin die Durchführung eines Kabels mit Stecker 21 durch die Materialaussparung 6. Auf Seite des Verstärkungsmoduls 10 können dann die Kabel im Verstärkungsmodul 10 eingegossen sein. Der Stecker 21 wird dabei geeignet vom Verstärkungsmodul gehalten, bspw. mit einer (nicht gezeigten) ClipVerbindung. Das Karosserieteil 1 wird hier rechts und links von der Materialaussparung 6 durch das Verstärkungsmodul 10 verstärkt. Horizontal verlaufende Stege 12 stabilisieren das Verstärkungsmodul 12 als Ganzes.

Der Schnitt C-C zeigt den Bereich einer dritten Befestigungsstelle 2, wo am Karosserieteil 1 das Türscharnier oben befestigt wird. Das Verstärkungsmodul 10 hat auch hier eingelassene bzw. integrierte Schraubmuttern 13, 14 wie an der Befestigungsstelle 7.

Der Schnitt D-D zeigt ferner einen Bereich ohne ein Verstärkungsmodul 10.

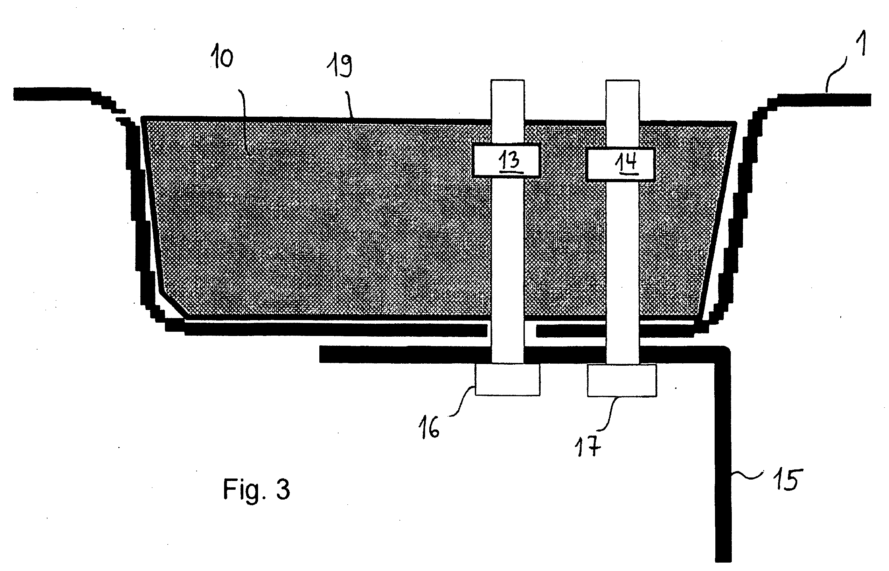

Figur 3 zeigt in einer Detailansicht den Schnitt C-C an der Befestigungsstelle 7 zur Befestigung eines Scharniers 15 am Karosserieteil 1 mit zwei in die Schraubmuttern 13, 14 eingeschraubten Schrauben 16, 17. Die Schraubmuttern 13, 14 befinden sich in Fig. 3 im Verstärkungsmodul 10. Sie können jedoch auch auf der dem Scharnier 15 abgewandten Seite des Verstärkungsmoduls 10 auf seiner Oberfläche 19 angeordnet sein und damit auf bzw. am Verstärkungsmodul 10 positioniert sein.

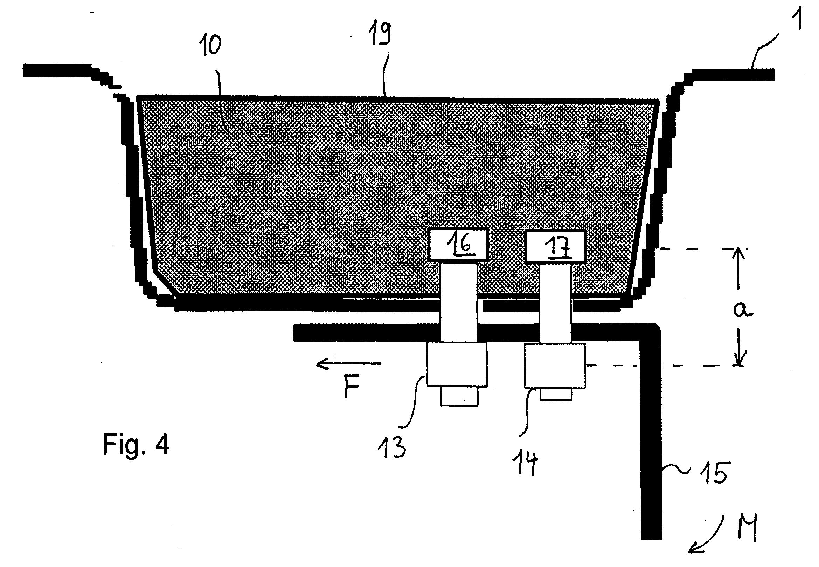

Figur 4 zeigt den zu Figur 3 korrespondierenden Fall, bei dem Schrauben 16, 17 in das Verstärkungsmodul 10 eingelassen sind. Durch die Integration der Schraube 16,17 in das Verstärkungsmodul 10 oder analog der Muttern 13,14 in das Verstärkungsteil 10 gemäß Figur 3, kann der Abstand Schraubenkopf-Schraubenmutter gezielt eingestellt werden. Wird ein Drehmoment M auf die Konstruktion ausgeübt, so wirkt auf die Schrauben 16,17 bei einem größeren Hebelarm a (dies ist der Abstand Schraubenkopf-Schraubenmutter) eine kleinere Kraft F = M/a. Durch die Vergrößerung des Hebelarms a ist somit die Befestigungsstelle im Fall eines Seitenaufpralls mechanisch stärker belastbar, ohne dass es dort zu lokalen Deformationen oder Lackbrüchen kommt.

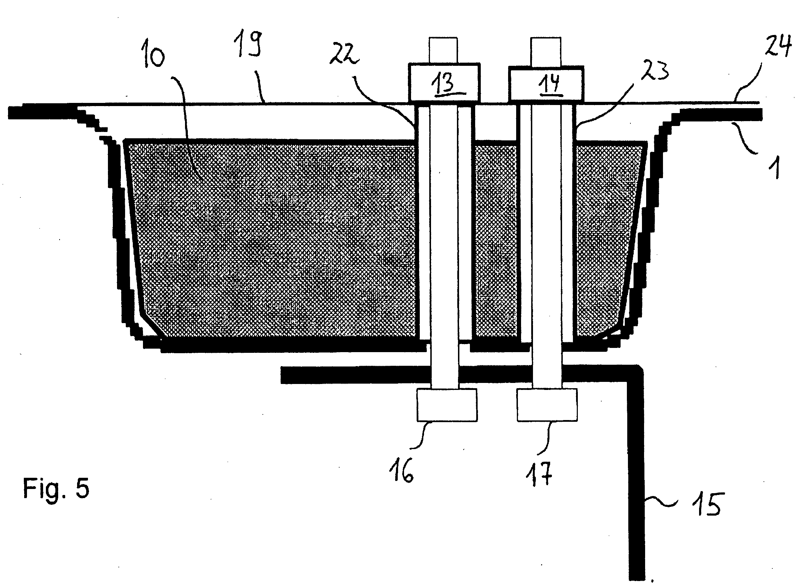

Figur 5 zeigt einen Schnitt C-C mit einer durchgehenden Öffnung 18, bspw. in Form einer zylindrischen Ausnehmung 20, an der Befestigungsstelle 7, in die eine Hülse 22, 23 eingebracht ist. Bei der Montage werden die Schrauben 16 und 17 von unten durch die Hülsen 22, 23 durchgeschoben und oben oberhalb oder unterhalb des Schließblechs 24 mit der Schraubmutter 13 bzw. 14 verschraubt.

Die obigen Ausführungsformen zeigen, dass das Verstärkungsmodul 10 dazu dient, drei Befestigungsstellen 2, 5 und 7 lokal zu verstärken. Hierbei sei darauf hingewiesen, dass mit dem Verstärkungsmodul 10 noch weitere Befestigungsstellen verstärkt werden können, und zum Beispiel auch alle Befestigungsstellen des Karosserieteils 1. Die Verstärkung erfolgt mit einem einzigen Verstärkungsmodul 10, das in der Montage schnell mit einer Kleb-, Clip-, Schweiß- oder einer sonstigen Verbindung mit dem Karosserieteil 1 verbunden wird. Die Verstärkung aller Befestigungsstellen erfolgt damit einfach, schnell und preiswert gegenüber einer Vorgehensweise, bei der die Befestigungsstellen 2, 5, 7 etc. einzeln verstärkt werden. Durch Formgebung und Materialwahl beim Verstärkungsmodul 10 kann für den Fall eines Seitenaufpralls ein verbesserter Schutz gegenüber Intrusionen erzielt werden. Gleichzeitig kann das Gewicht der Karosserie trotz des zusätzlichen Verstärkungsmoduls 10 insgesamt gemindert werden. Dies deshalb, weil lokalen Materialverdickungen beim Karosserieteil 1 vermieden werden können und weil zur Verstärkung auch leichte Materialien, z.B. Faserverbundwerkstoffe, verwendet werden können.

### Bezugszeichenliste

- 01: Karosserieteil
- 02: Befestigungsstelle
- 03: Loch
- 04: Loch
- 05: Befestigungsstelle
- 06: Materialaussparung
- 07: Befestigungsstelle
- 08: Loch
- 09: Loch
- 10: Verstärkungsmodul
- 11: Flansch
- 12: Steg
- 13: Schraubmutter
- 14: Schraubmutter
- 15: Scharnier
- 16: Schraube
- 17: Schraube
- 18: durchgehende Öffnung
- 19: Oberfläche
- 20: zylindrische Ausnehmung
- 21: Stecker
- 22: Hülse
- 23: Hülse
- 24: Schließblech

- M: Drehmoment
- F: Kraft
- a: Hebelarm

## Patentansprüche

1. Verstärkungsmodul (10) für eine Kraftfahrzeugkarosserie zur Anlage und Befestigung an einem Karosserieteil (1), wobei das Verstärkungsmodul (10) an einem Karosserieteil (1) befestigt ist und das Karosserieteil (1) mehrere Befestigungsstellen (2, 5, 7) für zu montierende Kraftfahrzeugkomponenten (15) besitzt und bei dem jeder Befestigungsstelle (2, 5, 7) des Karosserieteils (1) mindestens ein Befestigungsmittel zur Befestigung des Verstärkungsmoduls (10) am Karosserieteil (1) zugeordnet ist, **dadurch gekennzeichnet,**
**dass** das Befestigungsmittel als Schraube (16), Schraubmutter (13), Rastelement oder Clip ausgebildet ist und an dem Verstärkungsmodul (10) befestigt ist, wozu das Verstärkungsmodul (10) in einer durchgehenden Öffnung an der Befestigungsstelle (7) eine Hülse (22) hat,
oder
**dass** das Befestigungsmittel als Schraube (16), Schraubmutter (13) oder Rastelement ausgebildet ist und zumindest teilweise innerhalb des Verstärkungsmoduls (10) befestigt ist.

2. Verstärkungsmodul nach Anspruch 1, **dadurch gekennzeichnet, dass** als Befestigungsmittel eine Schraube vorgesehen ist und dass das Verstärkungsmodul in seiner Befestigungsposition am Karosserieteil mit einer seiner Schrauben durch ein an einer Befestigungsstelle befindliches Loch des Karosserieteils hindurchragt.

3. Verstärkungsmodul nach Anspruch 1, **dadurch gekennzeichnet, dass** als Befestigungsmittel eine Schraubmutter vorgesehen ist und dass das Verstärkungsmodul (10) in seiner Befestigungsposition am Karosserieteil eine seiner Schraubmuttern (13, 14) derart angeordnet hat, dass eine Schraube (16, 17), die durch ein an einer Befestigungsstelle befindliches Loch (8, 9) des Karosserieteils hindurchführbar ist, in die besagte Schraubmutter hineindrehbar ist.

4. Verstärkungsmodul nach einem der vorherigen Ansprüche, **dadurch gekennzeichnet, dass** Flansche (11) zum bündigen Anlegen an und Befestigen mit einem Teil einer Hochstrebe vorgesehen sind.

5. Verstärkungsmodul nach einem der vorherigen Ansprüche, **dadurch gekennzeichnet, dass** das Verstärkungsmodul in einer Clip-, Schweiß- oder Klebverbindung am Karosserieteil befestigt ist.

6. Verstärkungsmodul nach einem der vorherigen Ansprüche, **dadurch gekennzeichnet, dass** es zumindest teilweise aus Kunststoff gefertigt ist und/oder mehrere durchgehenden Öffnungen (18) besitzt.

7. Kraftfahrzeug mit einer Karosserie, aufweisend ein Karosserieteil (1) und ein Verstärkungsmodul (10) nach einem der vorherigen Ansprüche.

8. Kraftfahrzeug nach Anspruch 7, **dadurch gekennzeichnet, dass** das Karosserieteil eine Hochstrebe ist.

9. Kraftfahrzeug nach Anspruch 8, **dadurch gekennzeichnet, dass** die Hochstrebe die B-Säule ist.

## Claims

1. A reinforcing module (10) for a motor vehicle body, which may be brought into contact with and fastened to a body part (1), wherein the reinforcing module (10) is fastened to a body part (1), and the body part (1) comprises several fastening positions (2, 5, 7) for the vehicle components (15) to be mounted, and in which each fastening position (2, 5, 7) of the body part (1) is associated with at least one fastening means for fastening the reinforcing module (10) to the body part (1), **characterized in that** the fastening means is formed as a screw (16), a threaded nut (13), a latching element or clip, and is fastened to the reinforcing module (10), for which purpose the reinforcing module (10) comprises a sleeve (22) in a continuous opening at the fastening position (7), or the fastening means is formed as a screw (16), a threaded nut (13) or a latching element and is fastened at least in part within the reinforcing module (10).

2. A reinforcing module according to claim 1, **characterized in that** a screw is provided as a fastening means, and the reinforcing module, in its fastening position on the body part, protrudes with one of its screws through a hole of the body part situated at a fastening position.

3. A reinforcing module according to claim 1, **characterized in that** a threaded nut is provided as a fastening means, and the reinforcing module (10), in its fastening position on the body part, is arranged with one of its threaded nuts (13, 14) in such a way that a screw (16, 17), which can be guided through a hole (8, 9) of the body part situated at a fastening position, can be twisted into said threaded nut.

4. A reinforcing module according to one of the preceding claims, **characterized in that** flanges (11) are provided for the flush application and fastening to a portion of an upright strut.

5. A reinforcing module according to one of the preceding claims, **characterized in that** the reinforcing module is fastened to the body part in a snap-on, welded or glued connection.

6. A reinforcing module according to one of the preceding claims, **characterized in that** it is made at least partly of plastic and/or comprises several continuous openings (18).

7. A motor vehicle with a car body, comprising a body part (1) and a reinforcing module (10) according to one of the preceding claims.

8. A motor vehicle according to claim 7, **characterized in that** the body part is an upright strut.

9. A motor vehicle according to claim 8, **characterized in that** the upright strut is the B-pillar.

## Revendications

1. Module de renfort (10) pour une carrosserie de véhicule automobile, destiné à reposer et être fixé sur une partie de carrosserie (1), dans lequel le module de renfort (10) est fixé à une partie de carrosserie (1) et la partie de carrosserie (1) possède plusieurs points de fixation (2, 5, 7) pour des composants de véhicule automobile (15) à monter et dans lequel chaque point de fixation (2, 5, 7) de la partie de carrosserie (1) est associé à au moins un moyen de fixation pour la fixation du module de renfort (10) sur la partie de carrosserie (1), **caractérisé en ce que**
le moyen de fixation est conformé comme une vis (16), un écrou fileté (13), un élément d'enclenchement ou un clip et fixé au module de renfort (10), ce pour quoi le module de renfort (10) possède une douille (22) dans une ouverture traversante au point de fixation (7),
ou
**en ce que** le moyen de fixation est conformé comme une vis (16), un écrou fileté (13), un élément d'enclenchement et fixé au moins en partie à l'intérieur du module de renfort (10).

2. Module de renfort selon la revendication 1, **caractérisé en ce que** le moyen de fixation prévu est une vis et **en ce que** le module de renfort dans sa position de fixation sur la partie de carrosserie dépasse avec l'une de ses vis à travers un trou de la partie de carrosserie se trouvant en un point de fixation.

3. Module de renfort selon la revendication 1, **caractérisé en ce que** le moyen de fixation prévu est un écrou fileté et **en ce que** l'un des écrous filetés (13, 14) du module de renfort (10), dans la position de fixation de celui-ci sur la partie de carrosserie, est disposé de telle façon qu'une vis (16, 17) pouvant passer à travers un trou (8, 9) de la partie de carrosserie qui se trouve en un point de fixation puisse être vissée dans ledit écrou fileté.

4. Module de renfort selon l'une des revendications précédentes, **caractérisé en ce que** des brides (11) sont prévues pour l'appui en affleurement et la fixation sur une partie d'un montant.

5. Module de renfort selon l'une des revendications précédentes, **caractérisé en ce que** le module de renfort est fixé à la partie de carrosserie par un assemblage clipsé, soudé ou collé.

6. Module de renfort selon l'une des revendications précédentes, **caractérisé en ce qu'**il est au moins en partie fabriqué en plastique et/ou possède plusieurs ouvertures traversantes (18).

7. Véhicule automobile avec une carrosserie présentant une partie de carrosserie (1) et un module de renfort (10) selon l'une des revendications précédentes.

8. Véhicule automobile selon la revendication 7, caractérisé en que la partie de carrosserie est un montant.

9. Véhicule automobile selon la revendication 8, caractérisé en que le montant est le montant B.
